# EUROPEAN PATENT SPECIFICATION

(11) **EP 3 175 696 B1**
(45) Date of publication and mention of the grant of the patent: **18.07.2018**
(21) Application number: 16201539.0
(22) Date of filing: 30.11.2016
(51) Int. Cl.: A01C 23/00

(54) **DISTRIBUTING DEVICE, MANURING DEVICE AND METHOD FOR DISTRIBUTING LIQUID SUBSTANCES**
VERTEILUNGSVORRICHTUNG, GÜLLEAUSBRINGVORRICHTUNG UND VERFAHREN ZUR VERTEILUNG VON FLÜSSIGEN SUBSTANZEN
DISPOSITIF DE DISTRIBUTION, DISTRIBUTEUR DE LISIER ET PROCÉDÉ DE DISTRIBUTION DE SUBSTANCES LIQUIDES

(30) Priority: 03.12.2015 DE 102015121039
(43) Date of publication of application: 07.06.2017
(73) Proprietor: Bomech B.V., 7665 SH Albergen (NL)
(72) Inventor: SCHURINK, Gerard Johannes, 7665 SH Albergen (NL)
(74) Representative: Patentwerk B.V.

(56) References cited:
- EP-A1- 0 520 974
- EP-A1- 1 702 503
- DE-U1-202013 008 267
- FR-A1- 2 851 482

## Description

The invention relates to a distributing device for liquid substances such as for instance manure. The invention also relates to a manuring device for spreading liquid substances, such as for instance manure, over a ground surface. The invention further relates to a method for distributing liquid substances such as for instance manure.
Manuring devices (fertilizers), which are designed to spread liquid manure uniformly over the ground, are employed in soil manuring. The fertilizers are equipped for this purpose with one or more (generally two) spreader arms, provided with a plurality of conduits, whereby the liquid manure is guided to several distribution openings and from there comes to lie on the ground. For the purpose of distributing the liquid manure over the plurality of conduits use is made of distributors, which are for this purpose often placed on the spreader arms so as to limit the overall conduit length. The existing distributors are provided with a manure inlet connected to a manure reservoir (for instance a liquid manure tanker) and a plurality of manure outlets, to which the plurality of conduits are connected. These distributors are also equipped with one or more rotating blades and a perforated disc arranged on an inner side of the distributor against the manure outlets, which perforated disc is positioned relative to the manure outlets such that the holes of the perforated disc coincide with the manure outlets. When the blades slide along the perforated disc serving as counter-blade, solid parts present in the liquid manure are cut up and some of the manure outlets are closed by the blades, whereby the manure pressure on the other manure outlets is increased, which supports the manure outflow. The existing distributors are usually also equipped with a system for air post-suction which has to ensure that the manure outlets are provided with air at the moment that they are closed by the rotatable blades. The air post-suction thereby provides for a (partial) release of the vacuum which would be created in conduits were the manure outlets closed without air post-suction. The presence of air post-suction therefore results in a more constant outflow of liquid manure.

In order to obtain an optimal spread of the liquid manure over the ground it is desired to distribute the liquid manure over a large number (order of magnitude of several tens) of conduits. For this purpose a distributor has to be provided with a large number of manure outlets. The distributor must also provide sufficient space to a manure inlet and a motor connected to the blades. In addition, an air inlet has to be connected to the distributor for the purpose of the air post-suction. Finally, the distributors must be compact so as to take up little space on the spreader arms and not be too heavy. The spreader arms are generally folded up alongside a manure vehicle during road transport, and in this case must have a width, together with the manure vehicle, which remains below the legally permissible transport width. This is another reason why the distributors must have modest dimensions. In order to obtain a sufficiently compact distributor, in the generally known distributors this is to the detriment of the number of manure outlets or the diameter of the manure inlet, which results in a distributor with an insufficient number of manure outlets and/or a reduced capacity.
The German Gebrauchsmuster DE 20 2013 008 267 U1 discloses a distributor for liquids, including a distribution chamber with an inlet opening and a perforated disc with outlet openings that connects the chamber with a number of connecting pieces. In the distribution chamber rotates a knife drive shaft to which drive shaft an eccentric member is connected defining a first eccentric axis spaced apart from the drive shaft axis. The eccentric member drives a cutting blade that has a cutting edge abutting the perforated disc. Another example of a similar distributor with the features of the preamble of claim 1 is known from FR 2 851 482 A1. The object of the invention is to provide a distributing device which is provided with an air post-suction system and which combines a relatively high capacity with compact dimensions and/or is more effective in use.
The invention provides for this purpose a distributing device for liquid substances, such as for instance manure, comprising: a distribution chamber, which distribution chamber is provided with at least one supply and a plurality of discharges for liquid substance; a rotor situated in the distribution chamber, which rotor is provided with at least one cutting blade displaceable along a number of discharges, which cutting blade is configured to successively cover the discharges; a drive for driving the rotor via a drive shaft; a gas feed connecting to the side of the cutting blade facing toward the discharge, wherein the gas feed runs at least partially through the drive shaft. Drive shaft is understood to mean the shaft or the part of the shaft forming a direct connection between the rotor and the drive, wherein a first outer end of the drive shaft is connected to the rotor and a second outer end of the drive shaft is connected to the drive. On the inner side of the distributor a separate, optionally exchangeable perforated plate can be arranged against the discharges, which perforated plate serves as counter-blade to the at least one cutting blade and has holes which preferably coincide with the discharges. Because the gas feed runs at least partially through the drive shaft, the required space necessary on a peripheral wall of the distribution chamber to run the gas feed and the drive into the distribution chamber can be limited, whereby more space is for instance available on the peripheral wall of the distribution chamber for the at least one supply and/or the discharges for liquid substance, and it is moreover possible to opt to reduce the dimensions of the distributing device. A further advantage of running the gas feed at least partially through the drive shaft is that the gas feed and drive shaft lie on only one side of the distribution chamber. The attachment of the rotating parts to the distribution chamber has to take place in precise manner, whereby the dimensional tolerance of the parts in question has to be small. By placing the gas feed and drive shaft on only one side of the distribution chamber, tolerances of the parts on the other sides of the distribution chamber can be much greater, which is for instance advantageous in the case that welded parts have to be galvanized. Another advantage here is that the distributor can be overhauled in simple manner because there is a side along which access can be gained to the rotor in simple manner (this of course being the side of the distribution chamber lying opposite the side to which the gas feed and the drive shaft connect).

In an embodiment a part of the drive shaft connecting to the rotor comprises a throughfeed channel, which throughfeed channel comprises a peripheral wall formed wholly by the drive shaft, wherein the throughfeed channel forms part of the gas feed connecting to the cutting blade. The throughfeed channel, wholly enclosed in axial direction by the drive shaft, provides for an increase in the diameter of the drive shaft without this being to the detriment of the combined space necessary on a peripheral wall of the distribution chamber to run the gas feed and the drive through this peripheral wall and into the distribution chamber. Because of the greater diameter of the drive shaft, a relatively rigid shaft is obtained which enables a stable, single-sided suspension of the rotor.

In a further embodiment the at least one cutting blade is provided with a hollow shank placed perpendicularly of the cutting blade, which hollow shank is received rotatably in a hollow tubular holder, which holder is connected to the drivable rotor. The hollow shank received rotatably in the hollow, tubular holder enables rotation of the cutting blade relative to the rotor, making it possible to vary the part of the cutting blade performing the cutting action, this enhancing the durability of the cutting blade. The hollow shank, together with the hollow tubular holder, can also serve as gas feed connecting to the side of the cutting blade facing toward the discharge. It is possible to give the cutting blades a conical form, wherein the cone is hollow, whereby a space is left between the conical surface and a wall of the distribution chamber which is provided with discharges. This space is in contact with the discharge while the cutting blade covers a discharge, which improves the feed of gas from the side of the cutting blade facing toward the discharge to the discharge.

The rotor can also be provided with a plurality of cutting blades to make it possible to simultaneously cover a plurality of discharges. When a plurality of discharges are simultaneously covered by the cutting blades, the pressure in the distribution chamber and on the other discharges will increase, which improves the throughflow and distribution of the liquid substances through the discharges and the conduits connected thereto. In addition, it is possible to arrange the cutting blades on the rotor in rotation-symmetrical manner, whereby the centre of mass of the rotor coincides with the centre line of the drive shaft and vibrations and resonance of the rotating drive shaft can be limited.

It is likewise possible to urge the at least one cutting blade against the discharges under bias. The bias can guarantee the contact of the cutting blade with the wall of the distribution chamber which is provided with discharges, or the perforated plate optionally arranged thereon, whereby the cutting blade can successively wholly cover the discharges, this further supporting the pressure build-up in the distribution chamber. By being in constant contact with the wall of the distribution chamber which is provided with discharges (or with the perforated plate arranged thereon), the cutting blade will also move directly along holes, formed by the discharges, in the wall of the distribution chamber (or along the holes in the perforated plate), whereby the cutting action of the blade takes place on the basis of shearing. This makes it possible to increase the angle at which the cutting blade is sharpened without this being to the detriment of the effectiveness of the cutting blade, this enhancing the durability of the cutting edge of the cutting blade.

In yet another embodiment the cutting blade is urged against the discharges via a compression spring. The bias under which the at least one cutting blade is urged against the discharges can be brought about in simple manner with a compression spring. Such a compression spring can also be placed behind the cutting blade so that it forms part of the suspension of the cutting blade from the rotor. It is possible to choose the pitch, the spring tension and the material stress in the spring such that the spring is compressed during normal operation such that space is left between successive windings, so that it is possible at all times to carry gas along the windings and receive the spring in the gas feed without blocking the gas feed.

In order to give the discharges a releasing form and to improve the effectiveness of the cutting action it is possible to opt to have the discharges on a part connecting to the distribution chamber taper in the direction of the distribution chamber. The tapering outer end of the discharges ensures that the discharges do not lie at a right angle to the shear plane in which the at least one cutting blade moves along the holes formed in the wall of the distribution chamber by the discharges, but form an acute angle with the shear plane, which creates a certain cutting angle. This cutting angle increases the ease with which the at least one cutting blade can cut up solid parts in the liquid substance. In addition, the tapering outer end of the discharges gives the discharges a releasing form, which improves the throughflow of liquid substance through the discharges.

For the purpose of effectiveness of the cutting action the at least one cutting blade can comprise a discontinuous cutting edge. A discontinuous cutting edge is a cutting edge comprising at least one and preferably a plurality of discontinuities, as is the case in a sawing, toothed or serrated cutting edge. It is also possible for the cutting edge to define a polygon or a part of a polygon, whereby the cutting edge comprises a plurality of sides. Each of these sides cuts up the solid parts situated in the liquid substance at a different angle, this enhancing the effectiveness of the cutting action.

It is also possible to connect the rotor and the drive shaft releasably to each other. The releasable connection makes it easier to remove the rotor from the distribution chamber, whereby access to the rotor and the at least one cutting blade connected to the rotor can be gained in simple manner. This is useful in the case of maintenance to or cleaning of the distributing device. It is likewise advantageous for the releasable suspension of the rotor from the drive shaft to be formed by a flange connection. A flange connection enables the rotor to be uncoupled from the drive shaft in simple manner without for instance a shaft bearing, shaft seals and/or keyed joints of the rotor and the drive having to be released.

In order to have the part of the gas feed running through the drive shaft connect to the side of the at least one cutting blade facing toward the discharge it is possible to recess a gas throughfeed into the rotor, such that this gas throughfeed forms at least a part of the gas feed.

In yet another embodiment the distribution chamber is embodied substantially cylindrically or as multi-sided prism, wherein parts of the discharges which connect to the distribution chamber lie in a circle concentric to the centre line of the distribution chamber. A prismatic or cylindrical form of the distribution chamber enables application of a rotor in the most compact possible housing. The concentric orientation of the parts of the discharges which connect to the distribution chamber ensures that all discharges have the same position relative to the rotor and the at least one cutting blade connected thereto, whereby the liquid substance is distributed uniformly over the discharges. In order to maximize the number of discharges on the circle it is recommended to place the discharges as close together as possible on the above stated circle. In order to also create sufficient fitting space for conduits to be connected to the discharges, the outer ends of the discharges remote from the distribution chamber can be alternately placed in two concentric pitch circles.

In a further embodiment parts of the discharges which connect to the distribution chamber lie in at least two concentric circles around the centre line of the distribution chamber. Arranging two rows of discharges one below the other increases the number of discharges which can be connected to the distribution chamber. A large number of discharges makes it possible to connect to the discharges an equally large number of conduits which are connected to distribution openings, which provides for a wide spread of the liquid substance on a ground surface. The flow rate, and thereby the maximum capacity, of the distributing device can also be increased with a larger number of discharges.

In yet another embodiment the discharges lie on two opposite sides of the distribution chamber. This increases to far-reaching extent the number of discharges which can be connected to the distribution chamber. It is possible here for the rotor to be provided with at least two cutting blades, which are urged against the discharges lying on opposite sides of the distribution chamber, whereby the discharges on both sides of the distribution chamber can be closed. The at least two cutting blades hereby also ensure that solid parts can be cut up upstream of each of the discharges before being discharged through the discharges.

In yet another variant the supply for liquid substance and the drive lie at opposite end surfaces of the distribution chamber. Because the gas feed and drive shaft can be attached on one and the same side of the distribution chamber, when the supply for liquid substance is attached on the opposite side of the distribution chamber more space is created for the supply of liquid substance. The supply for liquid substance can hereby be widened, this further increasing the capacity of the distributing device. A widening of the supply for liquid substance is also accompanied by a decrease in pumping resistance, this resulting in a fuel saving.

For further support of the throughflow of liquid substance inside the distribution chamber the rotor can be provided with a deflecting member configured to deflect a flow of liquid substance, supplied via the supply to the distribution chamber in axial direction of the rotor, in radial direction of the rotor. In addition, the deflecting member can serve to distribute the liquid substance uniformly over the discharges if the discharges lie at two opposite end surfaces of the distribution chamber. By having the supply for liquid substance and the drive connect to opposite end surfaces of the distribution chamber, the flow of liquid substance entering through the supply will flow into the distribution chamber in a direction axially of the drive shaft and the rotor. Because the deflecting member deflects the incoming axial flow of liquid substance in radial direction, the liquid substance is prevented from flowing only in the direction of the discharges on the side of the distribution chamber opposite the supply. After deflection in radial direction of the rotor, the flow of liquid substance will be driven along one or more outflow channels defined by the rotor against a longitudinal side of the distribution chamber, after which the flow along the longitudinal side of the distribution chamber deflects in two axial directions toward the discharges lying at the two end surfaces of the distribution chamber. By applying the deflecting member the flow of liquid substance toward the discharges is thus (substantially) the same at both end surfaces of the distribution chamber. This results in a more uniform distribution of the liquid substance over the discharges, and finally to a better distribution of the liquid substance over the ground.

It is also possible for the rotor to be provided with a removable blocking means for blocking the flow of liquid substance, deflected in radial direction of the rotor, in at least one radial direction of the rotor. A plate or deflector, which closes off one of the channels formed by the rotor along which the liquid substance can flow out in radial direction, can be placed in the rotor as blocking means. The directions in which the flow of liquid substance can flow radially out of the rotor are hereby limited. The flow of liquid substance is hereby concentrated toward one or a few sides of the rotor, whereby the flow of liquid substance is directed toward a limited number of open discharges. During rotation of the rotor the flow of liquid substance will continuously change radial direction, whereby the limited number of discharges toward which the flow of liquid substance is directed also changes. Applying such a blocking means can for instance be desirable when the distributing device is used to distribute a liquid substance with a low viscosity. With such an adjustment the volume flow of liquid substance required to guarantee a good distribution over the discharges can also be reduced.

The present invention likewise relates to a method for distributing liquid substances, such as for instance manure, by means of a distributing device as described above, wherein a gas is fed through the drive shaft to the discharges. Advantages and embodiment variants of the method according to the invention have already been described at length in the foregoing and are included here by way of reference.

The present invention also relates to a manuring device for spreading liquid substances, such as for instance manure, over a ground surface, provided with two spreader arms, wherein the spreader arms are each provided with a number of distribution openings and wherein each of the spreader arms is provided with a distributing device as described above for distributing the liquid substances from a central manure supply, via conduits, over the distribution openings. Because the distributing device according to the invention is applied, such a manuring device has a relatively high capacity and enables a good spread of the liquid substances. In addition, placing of a distributing device on each of the spreader arms is possible owing to the limited dimensions of the distributing device. This is because the limited dimensions enable the spreader arms to be folded up alongside the manure vehicle during road transport and to have a width, together with the manure vehicle, which remains below the legally permissible transport width. The ability to place a distributing device on each spreader arm further increases both the capacity and the distributing precision.

The present invention will be further elucidated on the basis of the non-limitative exemplary embodiments shown in the following figures. Herein:
- figure 1 is a perspective view of a distributing device according to the present invention;
- figure 2 is a view of a cross-section of the distributing device shown in figure 1;
- figure 3 is a cut-away view of a part of a distributing device according to the present invention; and
- figure 4 is a perspective view of a cross-section of a part of a distributing device according to the present invention.

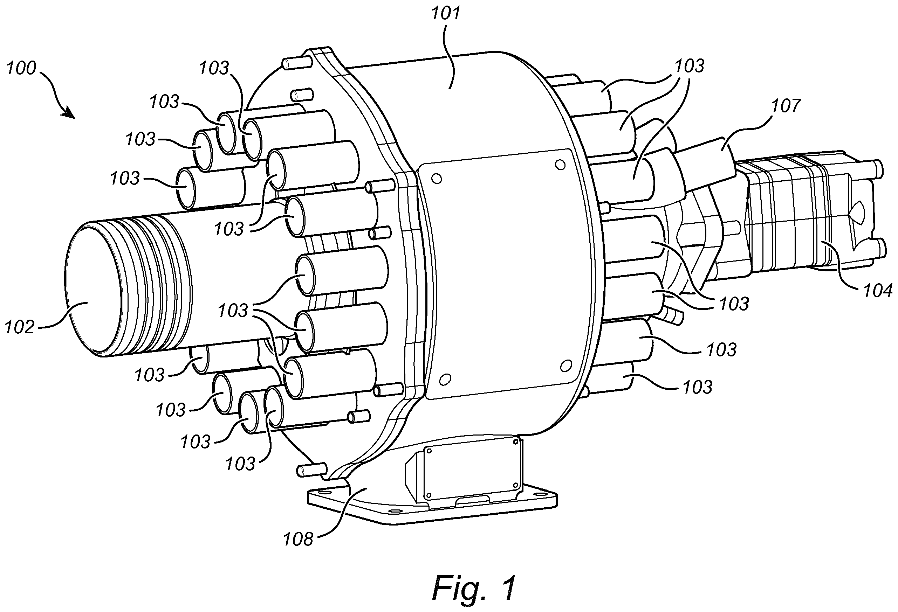

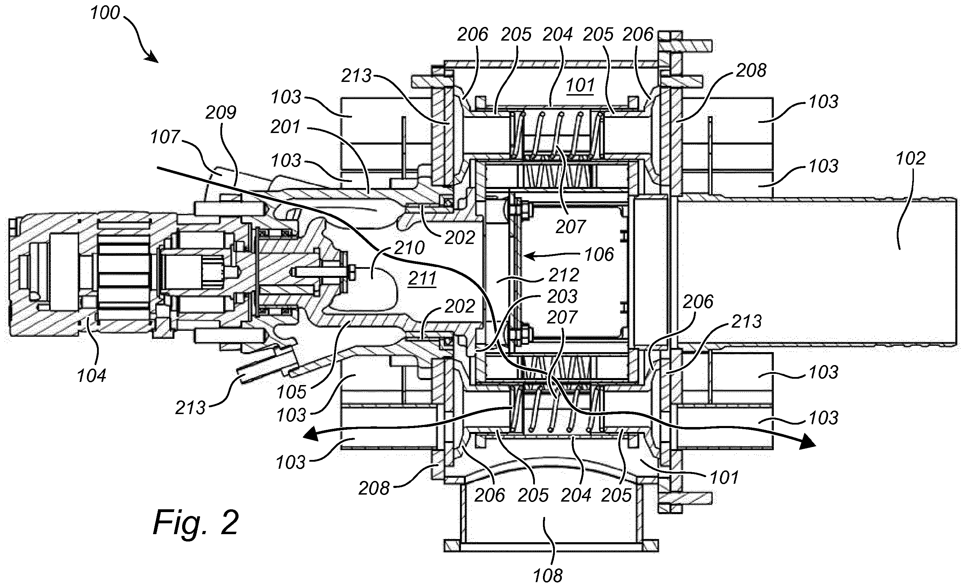

Figure 1 shows a perspective view of a distributing device 100 according to the present invention. Distributing device 100 comprises a cylindrical distribution chamber 101 to which a supply 102 for liquid substances, such as for instance manure, is connected at a first end surface. Likewise arranged on this side are a plurality of discharges 103 for discharging liquid substances via conduits (not drawn) to be connected to discharges 103. Distributing device 100 is provided at a second end surface of distribution chamber 101 with a drive 104, which drive 104 is configured via a drive shaft 105 (see figure 2) to drive a rotor 106 (see figure 2) situated in distribution chamber 101. The second end surface of distribution chamber 101 is also provided with a plurality of discharges 103 and a gas inlet 107, this gas inlet 107 being in contact with a gas feed 209 (see figure 2). Distributing device 100 is further provided with a base 108 for mounting on an external structure such as a spreader arm. In addition, base 108 serves as sediment reservoir for foreign parts, such as stones and iron objects, which contaminate the liquid substance and cannot be cut up. These foreign parts can be periodically removed via an opening on the underside of base 108.

Figure 2 is a cross-section of the distributing device 100 shown in figure 1, wherein corresponding components are designated with corresponding reference numerals. Figure 2 likewise shows a cylindrical distribution chamber 101 to which a supply 102 for liquid substances is connected at a first end surface. Distribution chamber 101 is provided via supply 102 for liquid substances with liquid substances, which are then discharged via discharges 103 likewise connected to distribution chamber 101. Arranged at a second end surface of distribution chamber 101 is a housing 201 which is connected on opposite sides to respectively distribution chamber 101 and drive 104, formed by a hydraulic motor. It is likewise possible to envisage drive 104 being formed by a different type of motor, such as an electric motor or a combustion motor. Drive 104 is configured to drive a rotor 106, situated in distribution chamber 101, via a drive shaft 105 rotatable in housing 201 via bearings 202. Rotor 106 is for this purpose connected to drive shaft 105 by means of a flange connection 203. Rotor 106 is provided on a peripheral side with hollow, tubular holders 204 in which two conical cutting blades 206 placed on hollow shanks 205 are arranged at opposite end surfaces of each of the tubular holders 204. Cutting blades 206 are urged via a compression spring 207 against perforated plates 213 serving as counter-blades to cutting blades 206. Perforated plates 213 are arranged on an inner side of walls 208 of distribution chamber 101, which are situated at the end surfaces of distribution chamber 101, in such a way that the holes of perforated plates 213 coincide with discharges 103. Cutting blades 206 cover some of the holes in perforated plates 213, whereby they also cover some of the discharges 103 arranged in walls 208. Distributing device 100 is also provided with a gas feed (indicated with arrow 209) for carrying a gas from a gas inlet 107 to discharges 103. Gas inlet 107 connects for this purpose to an opening arranged in housing 201 and is in contact, via housing 201 and holes 210 provided in drive shaft 105, with a throughfeed channel 211 enclosed by drive shaft 105. Throughfeed channel 211 is in contact with a gas throughfeed 212 recessed into rotor 106, which gas throughfeed 212 debouches via compression springs 207, tubular holders 204 and hollow shanks 205 under the conical cutting blades 206. Distributing device 100 is further provided with a flushing entrance 213 connected to housing 201, from where the gas feed can be flushed. Also visible is a base 108, which takes a hollow form, for mounting on an external structure such as a spreader arm and collecting solid parts which cannot be cut up by cutting blades 206.

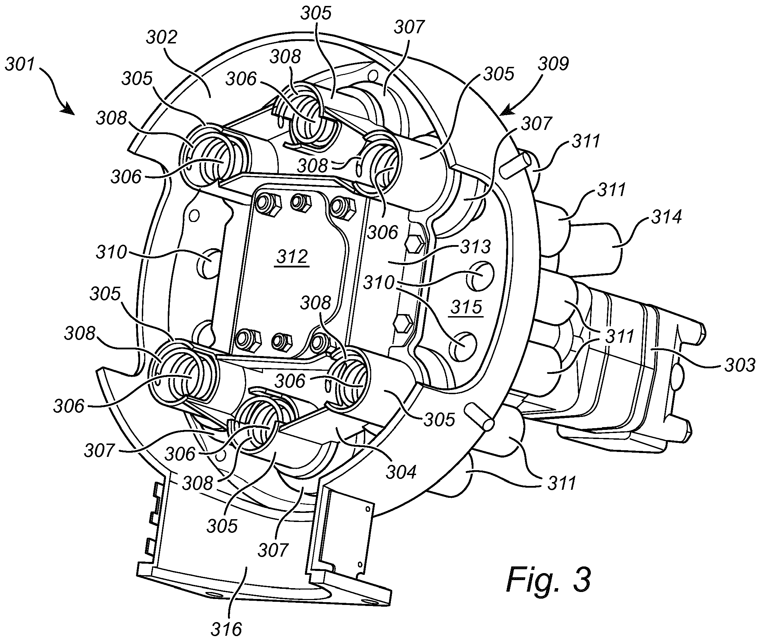

Figure 3 shows a cut-away view of a part of a distributing device 301 according to the present invention. Arranged inside a distribution chamber 302 is a rotor 304 driven by drive 303 via a drive shaft and provided on an outer side thereof with a plurality of hollow tubular holders 305. Holders 305 are each configured to rotatably receive one or more conical cutting blades 307 connected to hollow shanks 306. Also placed in the holders are compression springs 308 for urging cutting blades 307 against a perforated plate 315 arranged on a side wall 309 of distribution chamber 302. Perforated plate 315 and side wall 309 of distribution chamber 302 are provided with holes 310, lying in a circle close to the periphery, to which discharges 311 are connected. Liquid substance enters distribution chamber 302 via a supply (not shown), after which it flows via a deflecting member 312 of rotor 304 toward discharges 311 from two sides. Deflecting member 312 can be embodied as a removable plate for enabling removal of possible contamination/blockage (for instance by flushing with water). It is optionally possible to arrange a blocking means 313, for instance in the form of a plate, on one side of rotor 304 in order to limit the throughflow of liquid substance to a single direction, whereby the liquid substance flows toward discharges 311 from only one side of the rotor. Cutting blades 307 cut up possible hard parts situated in the liquid substance and successively cover holes 310 during rotation of rotor 304. Cutting blades 307 are also provided on a side facing toward side wall 309 of distribution chamber 302 with an opening for providing discharges 311 with air or another gas. This gas is carried via a gas inlet 314 at least partially through the drive shaft and toward rotor 304, after which the gas flows via a side of deflecting member 312 facing toward the drive shaft toward tubular holders 305. Via holes arranged in tubular holders 305 the gas will flow out, along the windings of compression springs 308 through hollow shanks 306 of cutting blades 307, under cutting blades 307. Distributing device 301 can be mounted on an external structure of a fertilizer by means of a base 316. Base 316 also serves as sediment reservoir for foreign parts which cannot be cut up.

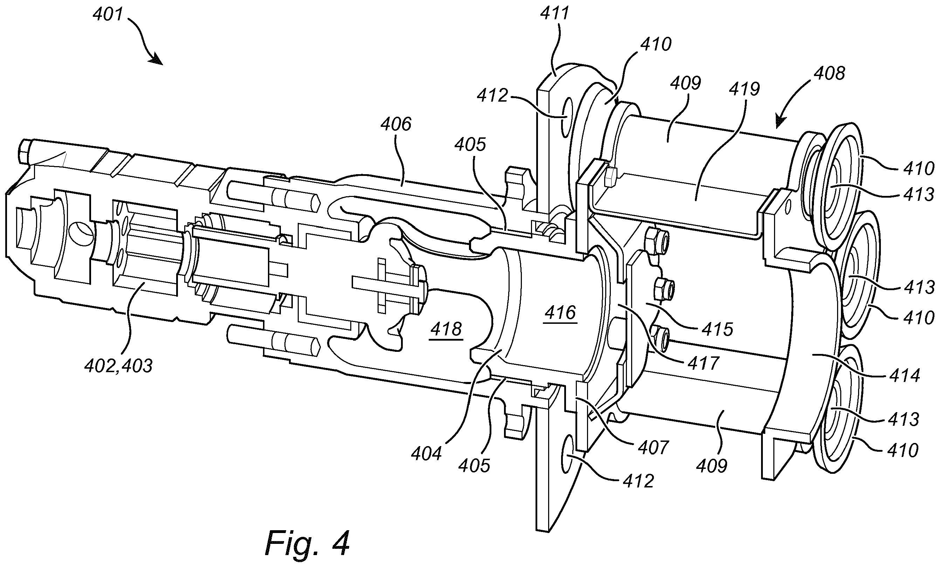

Figure 4 shows a perspective view of a cross-section of a part of a distributing device 401 according to the present invention. A drive 402 formed by a hydraulic motor 403 can be seen. Other forms of drive are however also possible in addition to a hydraulic drive. The hydraulic motor drives a drive shaft 404, which drive shaft is suspended with bearings 405 in a housing 406. Drive shaft 404 is connected by means of a flange connection 407 to a rotor 408 on a side remote from the hydraulic motor. Rotor 408 is provided with a plurality of hollow tubular holders 409 for receiving convex, conical cutting blades 410 rotatably in holder 409, which cutting blades 410 can move along a perforated plate 411 and successively cover holes 412 of perforated plate 411. Cutting blades 410 are provided on an underside with an opening 413, which opening 413 forms part of a gas feed for feeding gas to holes 412 and the discharges connecting thereto (not shown). Although the shown cutting blades have a continuous, circular cutting edge, it is also possible to apply one or more cutting blades with a discontinuous cutting edge, such as a sawing, toothed or serrated cutting edge, in this or in other embodiments of the distributing device. It is also possible for the cutting edge to define a polygon or a part of a polygon. Also forming part of the gas feed are a throughfeed channel 416 enclosed by drive shaft 404 and, connecting thereto, a gas throughfeed 417 recessed into rotor 408, which gas throughfeed 417 debouches via tubular holders 409 under conical cutting blades 410. The throughfeed channel 416 enclosed by drive shaft 404 is in contact via holes 418 arranged in drive shaft 404 with a gas inlet (not shown) connected to housing 406, through which inlet gas is fed to distributing device 401. Distributing device 401 is provided on a side of distributing device 401 opposite drive 402 with a supply 414 for supplying liquid substances to distributing device 401 in axial direction of the rotor, which liquid substances flow via a deflecting member 415 connected to rotor 408 along two sides of rotor 408 in radial direction of the rotor to holes 412, and are then distributed over the discharges (not shown). A removable blocking means 419 can optionally be placed on one side of rotor 408, which limits or blocks the volume flow of liquid substance to one side of rotor 408.

## Claims

1. Distributing device (100, 301, 401) for liquid substances, such as for instance manure, comprising:
- a distribution chamber (101, 302), which distribution chamber (101, 302) is provided with at least one supply (102, 414) and a plurality of discharges (103, 311) for liquid substance;
- a rotor (106, 304, 408) situated in the distribution chamber (101, 302), which rotor (106, 304, 408) is provided with at least one cutting blade (206, 307, 410) displaceable along a number of discharges (103, 311), which cutting blade (206, 307, 410) is configured to successively cover the discharges (103, 311);
- a drive (104, 303, 402, 403) for driving the rotor (106, 304, 408) via a drive shaft (105, 404);
- a gas feed (209) connecting to the side of the cutting blade (206, 307, 410) facing toward the discharge (103, 311), **characterised in that** the gas feed (209) runs at least partially through the drive shaft (105, 404).

2. Distributing device (100, 301, 401) as claimed in claim 1, **characterized in that** a part of the drive shaft (105, 404) connecting to the rotor (106, 304, 408) comprises a throughfeed channel (211, 416), which throughfeed channel (211, 416) comprises a peripheral wall formed wholly by the drive shaft (105, 404), wherein the throughfeed channel (211, 416) forms part of the gas feed (209) connecting to the cutting blade (206, 307, 410).

3. Distributing device (100, 301, 401) as claimed in any of the foregoing claims, **characterized in that** the at least one cutting blade (206, 307, 410) is provided with a hollow shank (205, 306) placed perpendicularly of the cutting blade (206, 307, 410), which hollow shank (205, 306) is received rotatably in a hollow tubular holder (204, 305, 409), which holder (204, 305, 409) is connected to the drivable rotor (106, 304, 408).

4. Distributing device (100, 301, 401) as claimed in any of the foregoing claims, **characterized in that** the rotor (106, 304, 408) is provided with a plurality of cutting blades (206, 307, 410) to make it possible to simultaneously cover a plurality of discharges (103, 311).

5. Distributing device (100, 301, 401) as claimed in any of the foregoing claims, **characterized in that** the at least one cutting blade (206, 307, 410) is urged against the discharges (103, 311) under bias.

6. Distributing device (100, 301, 401) as claimed in claim 5, **characterized in that** the at least one cutting blade (206, 307, 410) is urged against the discharges (103, 311) via a compression spring (207, 308).

7. Distributing device (100, 301, 401) as claimed in any of the foregoing claims, **characterized in that** the discharges (103, 311) on a part connecting to the distribution chamber (101, 302) taper in the direction of the distribution chamber (101, 302).

8. Distributing device (100, 301, 401) as claimed in any of the foregoing claims, **characterized in that** the at least one cutting blade (206, 307, 410) comprises a discontinuous cutting edge.

9. Distributing device (100, 301, 401) as claimed in any of the foregoing claims, **characterized in that** the rotor (106, 304, 408) and the drive shaft (105, 404) are connected releasably to each other.

10. Distributing device (100, 301, 401) as claimed in any of the foregoing claims, **characterized in that** a gas throughfeed (212, 416) is recessed into the rotor (106, 304, 408).

11. Distributing device (100, 301, 401) as claimed in any of the foregoing claims, **characterized in that** the distribution chamber (101, 302) is embodied as multi-sided prism or substantially cylindrically, wherein parts of the discharges (103, 311) which connect to the distribution chamber (101, 302) lie in a circle concentric to the centre line of the distribution chamber (101, 302), and that parts of the discharges (103, 311) which connect to the distribution chamber (101, 302) lie in at least two concentric circles around the centre line of the distribution chamber (101, 302).

12. Distributing device (100, 301, 401) as claimed in any of the foregoing claims, **characterized in that** the supply (102, 414) for liquid substance and the drive (104, 303, 402, 403) lie at opposite end surfaces of the distribution chamber (101, 302), the rotor (106, 304, 408) is provided with a deflecting member (312, 415) configured to deflect a flow of liquid substance, supplied via the supply (102, 414) to the distribution chamber (101, 302) in axial direction of the rotor (106, 304, 408), in radial direction of the rotor (106, 304, 408), and that the rotor (106, 304, 408) is provided with a removable blocking means (313, 419) for blocking the flow of liquid substance, deflected in radial direction of the rotor (106, 304, 408), in at least one radial direction of the rotor (106, 304, 408).

13. Method for distributing liquid substances, such as for instance manure, by means of a distributing device (100, 301, 401) as claimed in any of the foregoing claims, wherein a gas is fed through the drive shaft (105, 404) to the discharges (103, 311).

14. Manuring device (100, 301, 401) for spreading liquid substances, such as for instance manure, over a ground surface, provided with two spreader arms, wherein the spreader arms are each provided with a number of distribution openings and wherein each of the spreader arms is provided with a distributing device (100, 301, 401) as claimed in any of the claims 1-12 for distributing the liquid substance from a central manure supply (102, 414), via conduits, over the distribution openings.

## Patentansprüche

1. Verteilungsvorrichtung (100, 301, 401) für flüssige Substanzen, wie beispielsweise Gülle, umfassend:
- eine Verteilungskammer (101, 302), wobei die Verteilungskammer (101, 302) mit mindestens einer Zufuhr (102, 414) und einer Mehrzahl von Abfuhren (103, 311) für die flüssige Substanz versehen ist;
- einen Rotor (106, 304, 408), der in der Verteilungskammer (101, 302) angeordnet ist, wobei der Rotor (106, 304, 408) mit mindestens einer Schneidklinge (206, 307, 410) versehen ist, die entlang einer Anzahl von Abfuhren (103, 311) verschiebbar ist, wobei die Schneidklinge (206, 307, 410) ausgelegt ist, aufeinanderfolgend die Abfuhren (103, 311) abzudecken;
- einen Antrieb (104, 303, 402, 403) zum Antreiben des Rotors (106, 304, 408) über eine Antriebswelle (105, 404);
- eine Gaszufuhr (209), welche mit der Seite der Schneidklinge (206, 307, 410) verbunden ist, die der Abfuhr (103, 311) zugewandt ist;
**dadurch gekennzeichnet, dass** die Gaszufuhr (209) mindestens teilweise durch die Antriebswelle (105, 404) verläuft.

2. Verteilungsvorrichtung (100, 301, 401) nach Anspruch 1, **dadurch gekennzeichnet, dass** ein Teil der Antriebswelle (105, 404), der mit dem Rotor (106, 304, 408) verbunden ist, einen Durchfuhrkanal (211, 416) umfasst, wobei der Durchfuhrkanal (211, 416) eine periphere Wand umfasst, die zur Gänze von der Antriebswelle (105, 404) gebildet wird, wobei der Durchfuhrkanal (211, 416) einen Teil der Gaszufuhr (209) bildet, die mit der Schneidklinge (206, 307, 410) verbunden ist.

3. Verteilungsvorrichtung (100, 301, 401) nach einem der vorhergehenden Ansprüche, **dadurch gekennzeichnet, dass** mindestens eine Schneidklinge (206, 307, 410) mit einem hohlen Schaft (205, 306) versehen ist, der rechtwinklig zur Schneidklinge (206, 307, 410) platziert ist, wobei der hohle Schaft (205, 306) drehbar in einem hohlen rohrförmigen Halter (204, 305, 409) aufgenommen ist, wobei der Halter (204, 305, 409) mit dem treibbaren Rotor (106, 304, 408) verbunden ist.

4. Verteilungsvorrichtung (100, 301, 401) nach einem der vorhergehenden Ansprüche, **dadurch gekennzeichnet, dass** der Rotor (106, 304, 408) mit einer Mehrzahl von Schneidklingen (206, 307, 410) versehen ist, um zu ermöglichen, dass gleichzeitig eine Mehrzahl von Abfuhren (103, 311) abgedeckt wird.

5. Verteilungsvorrichtung (100, 301, 401) nach einem der vorhergehenden Ansprüche, **dadurch gekennzeichnet, dass** mindestens eine Schneidklinge (206, 307, 410) gegen die Abfuhren (103, 311) unter einer Vorspannung gedrückt wird.

6. Verteilungsvorrichtung (100, 301, 401) nach Anspruch 5, **dadurch gekennzeichnet, dass** mindestens eine Schneidklinge (206, 307, 410) gegen die Abfuhren (103, 311) über eine Druckfeder (207, 308) gedrückt wird.

7. Verteilungsvorrichtung (100, 301, 401) nach einem der vorhergehenden Ansprüche, **dadurch gekennzeichnet, dass** sich die Abfuhren (103, 311) auf einem Teil, der mit der Verteilungskammer (101, 302) verbunden ist, in der Richtung der Verteilungskammer (101, 302) verjüngen.

8. Verteilungsvorrichtung (100, 301, 401) nach einem der vorhergehenden Ansprüche, **dadurch gekennzeichnet, dass** die mindestens eine Schneidklinge (206, 307, 410) eine diskontinuierliche Schneidklinge umfasst.

9. Verteilungsvorrichtung (100, 301, 401) nach einem der vorhergehenden Ansprüche, **dadurch gekennzeichnet, dass** der Rotor (106, 304, 408) und die Antriebswelle (105, 404) lösbar miteinander verbunden sind.

10. Verteilungsvorrichtung (100, 301, 401) nach einem der vorhergehenden Ansprüche, **dadurch gekennzeichnet, dass** eine Gasdurchfuhr (212, 416) in den Rotor (106, 304, 408) vertieft ist.

11. Verteilungsvorrichtung (100, 301, 401) nach einem der vorhergehenden Ansprüche, **dadurch gekennzeichnet, dass** die Verteilungskammer (101, 302) als mehrseitiges Prisma oder im Wesentlichen zylindrisch verkörpert ist, wobei Teile der Abfuhren (103, 311), die mit der Verteilungskammer (101, 302) verbunden sind, in einem Kreis konzentrisch zur Mittellinie der Verteilungskammer (101, 302) liegen, und dadurch, dass Teile der Abfuhren (103, 311), die mit der Verteilungskammer (101, 302) verbunden sind, in mindestens zwei konzentrischen Kreisen um die Mittellinie der Verteilungskammer (101, 302) liegen.

12. Verteilungsvorrichtung (100, 301, 401) nach einem der vorhergehenden Ansprüche, **dadurch gekennzeichnet, dass** die Zufuhr (102, 414) für die flüssige Substanz und der Antrieb (104, 303, 402, 403) an gegenüberliegenden Endflächen der Verteilungskammer (101, 302) liegen, wobei der Rotor (106, 304, 408) mit einem Ablenkelement (312, 415) versehen ist, das ausgelegt ist, einen Strom der flüssigen Substanz, die über die Zufuhr (102, 414) der Verteilungskammer (101, 302) in einer axialen Richtung des Rotors (106, 304, 408) zugeführt wird, in einer radialen Richtung des Rotors (106, 304, 408) abzulenken, und dadurch, dass der Rotor (106, 304, 408) mit einem entfernbaren Blockiermittel (313, 419) zum Blockieren des Stroms der flüssigen Substanz, die in einer radialen Richtung des Rotors (106, 304, 408) abgelenkt wird, in mindestens einer radialen Richtung des Rotors (106, 304, 408) versehen ist.

13. Verfahren zur Verteilung von flüssigen Substanzen, wie beispielsweise Gülle, durch eine Verteilungsvorrichtung (100, 301, 401) nach einem der vorhergehenden Ansprüche, wobei ein Gas durch die Antriebswelle (105, 404) zu den Abfuhren (103, 311) geführt wird.

14. Gülleausbringvorrichtung (100, 301, 401) zur Ausbreitung von flüssigen Substanzen, wie beispielsweise Gülle, über eine Bodenfläche, welche mit zwei Spreizarmen versehen ist, wobei die Spreizarme jeweils mit einer Anzahl von Verteilungsöffnungen versehen sind, und wobei jeder der Spreizarme mit einer Verteilungsvorrichtung (100, 301, 401) nach einem der Ansprüche 1 bis 12 zur Verteilung der flüssigen Substanz von einer zentralen Güllezufuhr (102, 414) über Leitungen über die Verteilungsöffnungen versehen ist.

## Revendications

1. Distributeur (100, 301, 401) pour des substances liquides, par exemple du lisier, comprenant :
- une chambre de distribution (101, 302), ladite chambre de distribution (101, 302) étant pourvue d'au moins une alimentation (102, 414) et d'une pluralité de décharges (103, 311) pour une substance liquide ;
- un rotor (106, 304, 408) situé dans la chambre de distribution (101, 302), ledit rotor (106, 304, 408) étant pourvu d'au moins une lame de coupe (206, 307, 410) pouvant être déplacée le long d'une pluralité de décharges (103, 311), ladite lame de coupe (206, 307, 410) étant configurée pour couvrir successivement les décharges (103, 311) ;
- un entraînement (104, 303, 402, 403) pour entraîner le rotor (106, 304, 408) par le biais d'un arbre d'entraînement (105, 404) ;
- une alimentation en gaz (209) se raccordant au côté de la lame de coupe (206, 307, 410) tourné vers la décharge (103, 311),
**caractérisé en ce que** l'alimentation en gaz (209) s'étend au moins en partie à travers l'arbre d'entraînement (105, 404).

2. Distributeur (100, 301, 401) selon la revendication 1, **caractérisé en ce qu'**une partie de l'arbre d'entraînement (105, 404) se raccordant au rotor (106, 304, 408) comprend un canal d'alimentation (211, 416), ledit canal d'alimentation (211, 416) comprenant une paroi périphérique formée entièrement par l'arbre d'entraînement (105, 404), le canal d'alimentation (211, 416) faisant partie de l'alimentation en gaz (209) se raccordant à la lame de coupe (206, 307, 410).

3. Distributeur (100, 301, 401) selon l'une quelconque des revendications précédentes, **caractérisé en ce que** l'au moins une lame de coupe (206, 307, 410) est pourvue d'une tige creuse (205, 306) placée perpendiculairement à la lame de coupe (206, 307, 410), ladite tige creuse (205, 306) étant reçue de manière rotative dans un support tubulaire creux (204, 305, 409), ledit support (204, 305, 400) étant connecté au rotor pouvant être entraîné (106, 304, 408).

4. Distributeur (100, 301, 401) selon l'une quelconque des revendications précédentes, **caractérisé en ce que** le rotor (106, 304, 408) est pourvu d'une pluralité de lames de coupe (206, 307, 410) afin de permettre de couvrir simultanément une pluralité de décharges (103, 311).

5. Distributeur (100, 301, 401) selon l'une quelconque des revendications précédentes, **caractérisé en ce que** l'au moins une lame de coupe (206, 307, 410) est poussée contre les décharges (103, 311) sous l'effet d'une sollicitation.

6. Distributeur (100, 301, 401) selon la revendication 5, **caractérisé en ce que** l'au moins une lame de coupe (206, 307, 410) est poussée contre les décharges (103, 311) par le biais d'un ressort de compression (207, 308).

7. Distributeur (100, 301, 401) selon l'une quelconque des revendications précédentes, **caractérisé en ce que** les décharges (103, 311) sur une partie se raccordant à la chambre de distribution (101, 302) sont effilées dans la direction de la chambre de distribution (101, 302).

8. Distributeur (100, 301, 401) selon l'une quelconque des revendications précédentes, **caractérisé en ce que** l'au moins une lame de coupe (206, 307, 410) comprend un bord de coupe discontinu.

9. Distributeur (100, 301, 401) selon l'une quelconque des revendications précédentes, **caractérisé en ce que** le rotor (106, 304, 408) et l'arbre d'entraînement (105, 404) sont connectés l'un à l'autre de manière détachable.

10. Distributeur (100, 301, 401) selon l'une quelconque des revendications précédentes, **caractérisé en ce qu'**un passage de gaz (212, 416) est renfoncé dans le rotor (106, 304, 408).

11. Distributeur (100, 301, 401) selon l'une quelconque des revendications précédentes, **caractérisé en ce que** la chambre de distribution (101, 302) est réalisée sous la forme d'un prisme à plusieurs facettes ou de manière sensiblement cylindrique, des parties des décharges (103, 311) qui se raccordent à la chambre de distribution (101, 302) étant situées sur un cercle concentrique à l'axe central de la chambre de distribution (101, 302) et **en ce que** des parties des décharges (103, 311) qui se raccordent à la chambre de distribution (101, 302) sont situées sur au moins deux cercles concentriques autour de l'axe central de la chambre de distribution (101, 302).

12. Distributeur (100, 301, 401) selon l'une quelconque des revendications précédentes, **caractérisé en ce que** l'alimentation (102, 414) de substances liquides et l'entraînement (104, 303, 402, 403) sont disposés au niveau de surfaces d'extrémité opposées de la chambre de distribution (101, 302), le rotor (106, 304, 408) étant pourvu d'un organe de déflection (312, 415) configuré pour dévier, dans la direction radiale du rotor (106, 304, 408), un écoulement de substance liquide fourni par le biais de l'alimentation (102, 414) à la chambre de distribution (101, 302) dans la direction axiale du rotor (106, 304, 408), et **en ce que** le rotor (106, 304, 408) est pourvu d'un moyen de blocage amovible (313, 419) pour bloquer, dans au moins une direction radiale du rotor (106, 304, 408), l'écoulement de substance liquide dévié dans la direction radiale du rotor (106, 304, 408).

13. Procédé pour distribuer des substances liquides, par exemple du lisier, au moyen d'un distributeur (100, 301, 401) selon l'une quelconque des revendications précédentes, dans lequel un gaz est acheminé à travers l'arbre d'entraînement (105, 404) jusqu'aux décharges (103, 311).

14. Dispositif d'épandage de lisier (100, 301, 401) pour épandre des substances liquides, par exemple du lisier, sur une surface du sol, comprenant deux bras d'épandage, les bras d'épandage étant chacun pourvus d'une pluralité d'ouvertures de distribution et chacun des bras d'épandage étant pourvu d'un distributeur (100, 301, 401) selon l'une quelconque des revendications 1 à 12 pour distribuer la substance liquide à partir d'une alimentation centrale en lisier (102, 414), par le biais de conduites, à travers les ouvertures de distribution.
